# EUROPÄISCHE PATENTSCHRIFT

(11) **EP 0 797 892 B1**
(45) Veröffentlichungstag und Bekanntmachung des Hinweises auf die Patenterteilung: **12.04.2000**
(21) Anmeldenummer: 96945483.4
(22) Anmeldetag: 07.10.1996
(51) Int. Cl.: H04N 7/08

(54) **VERFAHREN ZUR TERRESTRISCHEN ÜBERTRAGUNG DIGITALER SIGNALE**
METHOD OF TERRESTRIALLY TRANSMITTING DIGITAL SIGNALS
PROCEDE DE TRANSMISSION TERRESTRE DE SIGNAUX NUMERIQUES

(30) Priorität: 16.10.1995 DE 19538302
(43) Veröffentlichungstag der Anmeldung: 01.10.1997
(73) Patentinhaber: ROBERT BOSCH GMBH, 70442 Stuttgart (DE)
(72) Erfinder: SIEGLE, Gert, D-31139 Hildesheim (DE)
(86) Internationale Anmeldenummer: DE9601919
(87) Internationale Veröffentlichungsnummer: WO9715121

(56) Entgegenhaltungen:
- EP-A- 0 263 449
- EP-A- 0 576 797
- FERNSEH UND KINOTECHNIK, Bd. 48, Nr. 3, 1.März 1994, Seiten 109-114, XP000434275 KAYS R: "KANALCODIERUNG UND MODULATION FUR DIE DIGITALE FERNSEHUBERTRAGUNG"
- FERNSEH UND KINOTECHNIK, Bd. 46, Nr. 9, 1.September 1992, Seiten 559-561, 566 - 568, 570, XP000310226 KAYS R: "DIGITALE FERNSEHUEBERTRAGUNG - SYSTEMKONZEPTE UND EINFUEHRUNGSCHANCEN"
- BBC RESEARCH AND DEVELOPMENT REPORT, Nr. 12, 1.Januar 1990, Seiten A-C, 1 - 21, XP000175800 LAFLIN N J ET AL: "THE PROVISION OF CIRCUITS TO OUTSIDE BROADCAST LOCATIONS USING SPECTRUM WITHIN THE UHF BROADCASTING BANDS"

## Beschreibung

### Stand der Technik

Die Erfindung geht von einem Verfahren nach der Gattung des Hauptanspruchs aus.

Bei der terrestrischen Signalverteilung von Fernsehsignalen können durch topographische Gegebenheiten sowie vor allem durch unterschiedliche Entfernungen des Empfängers von den verschiedenen Sendern am Empfangsort sehr große Feldstärkeunterschiede entstehen. Aufgrund der stets nur begrenzten Selektivität und Linearität der Empfänger-Eingangsstufe können bei der Belegung aller theoretisch möglichen Fernsehkanäle insbesondere bei der Belegung benachbarter Fernehkanäle mit analog modulierten Fernsehprogrammen Störungen durch allzu große Unterschiede zwischen den Pegeln von Nutz- und Nachbarkanal sowie durch Kreuz- und Intermodulation auftreten. Diese Störungen versucht man dadurch zu begrenzen, daß Nachbarkanalbelegungen vermieden werden. Die so nicht verwendbaren Nachbarkanäle bezeichnet man oft als verbotene Kanäle. Dies hat wegen der flächigen Versorgung und daraus resultierender Überlappungen verschiedener Sender für ein bestimmtes Gebiet die Folge, daß längst nicht alle terrestrisch möglichen Fernsehkanäle belegt werden können. Die daraus resultierende Frequenznot wird noch dadurch verstärkt, daß sogar für zwei Sender, die das gleiche Programm ausstrahlen, im Überlappungsbereich unterschiedliche Frequenzen vorzusehen sind, da andernfalls in der Regel Gleichkanalstörungen wie zum Beispiel Geisterbilder durch Laufzeitunterschiede und Auslöschzonen durch Interferenzen auftreten.

### Vorteile der Erfindung

Das erfindungsgemäße Verfahren mit den Merkmalen des Hauptanspruchs hat demgegenüber den Vorteil, daß die nicht genutzten verbotenen Kanäle mit digitalen Signalen, insbesondere mit digitalen Rundfunk- und/oder Fernsehrundfunksignalen belegt werden können, ohne daß es zu nennenswerter Inter- und Kreuzmodulation mit anderen digitalen Signalen und mit den analogen Signalen bereits belegter Kanäle kommt. Auf diese Weise lassen sich deutlich mehr Kanäle für die terrestrische Signalverteilung nutzen.

Durch die in den Unteransprüchen aufgeführten Maßnahmen sind vorteilhafte Weiterbildungen und Verbesserungen des im Hauptanspruch angegebenen Verfahrens möglich.

Zur Reduzierung von Inter- und Kreuzmodulation verwendet man vorteilhaft eine Modulation der digitalen Signale nach dem OFDM-Verfahren gemäß Anspruch 2.

Vorteilhaft gemäß Anspruch 3 und Anspruch 4 ist die Maßnahme, das mindestens eine digitale Signal mit vergleichsweise niedrigen Pegeln zu übertragen. Dadurch werden die im Vergleich zu digitalen Signalen störempfindlicheren analogen Signale bei begrenzter Selektivität der Empfänger-Eingangsstufe beim Empfang nicht nennenswert beeinträchtigt.

Aus der Reduktion der Datenmenge gemäß Anspruch 5 ergibt sich der Vorteil, daß möglichst viele Programme und/oder Datendienste in den verbotenen Kanälen untergebracht werden können.

Die Einrichtung eines Schutzfrequenzabstandes zwischen dem Frequenzbereich mindestens einen digitalen Signals und mindestens einem Nachbarkanal führt zu einer vorteilhaften Erhöhung der Störsicherheit bei der stets begrenzten Selektivität von Empfänger-Eingangsstufen und Decodierung.

Vorteilhaft gemäß Anspruch 7 ist die Verwendung der selben Frequenz im selben Kanal für ein Programm oder einen Datendienst bei Abstrahlung von verschiedenen Sendern. Auf diese Weise ist die bestmögliche Erhöhung der Zahl der Programme für die terrestrische Signalverteilung innerhalb eines vorgegebenen Frequenzbereiches möglich.

Vorteilhaft gemäß Anspruch 8 ist der Schutz mehrerer digitaler Daten-, Rundfunk- und/oder Fernsehrundfunksignale vor gegenseitiger Beeinflussung beim Empfang durch Verwendung eines Schutzfrequenzabstandes.

### Zeichnung

Ein Ausführungsbeispiel der Erfindung ist in der Zeichnung dargstellt und in der nachfolgenden Beschreibung näher erläutert. Es zeigt Figur 1 eine Vorrichtung zur terrestrischen Abstrahlung digitaler Daten-, Rundfunk-und/oder Fernsehrundfunksignale, die Figuren 2 und 3 jeweils ein Beispiel für die Belegung dreier benachbarter Kanäle mit analogen und digitalen Signalspektren, Figur 4 eine Einrichtung zum Empfang der terrestrisch übertragenen digitalen Signale, Figur 5 ein Spektrum eines digitalen Signals und Figur 6 eine Kanalbelegung für die Übertragung von DVB-Signalen.

### Beschreibung des Ausführungsbeispiels

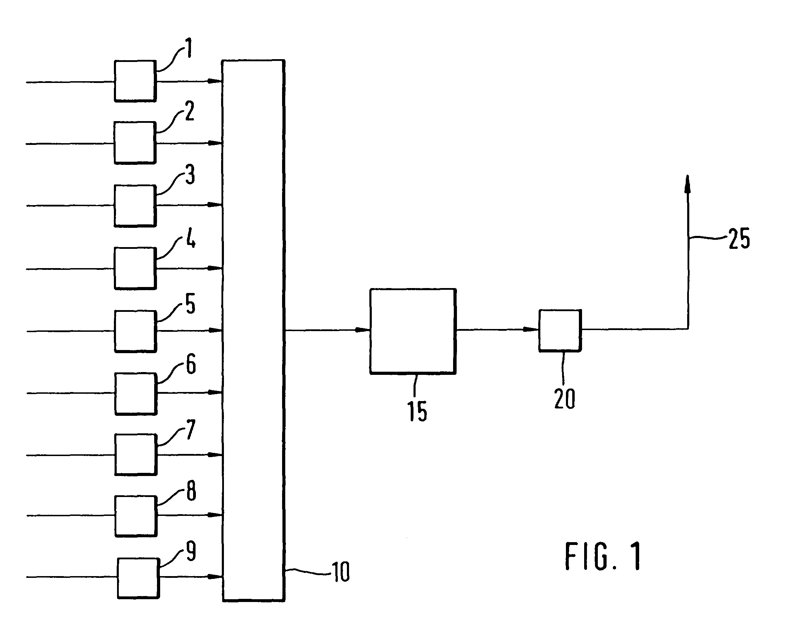

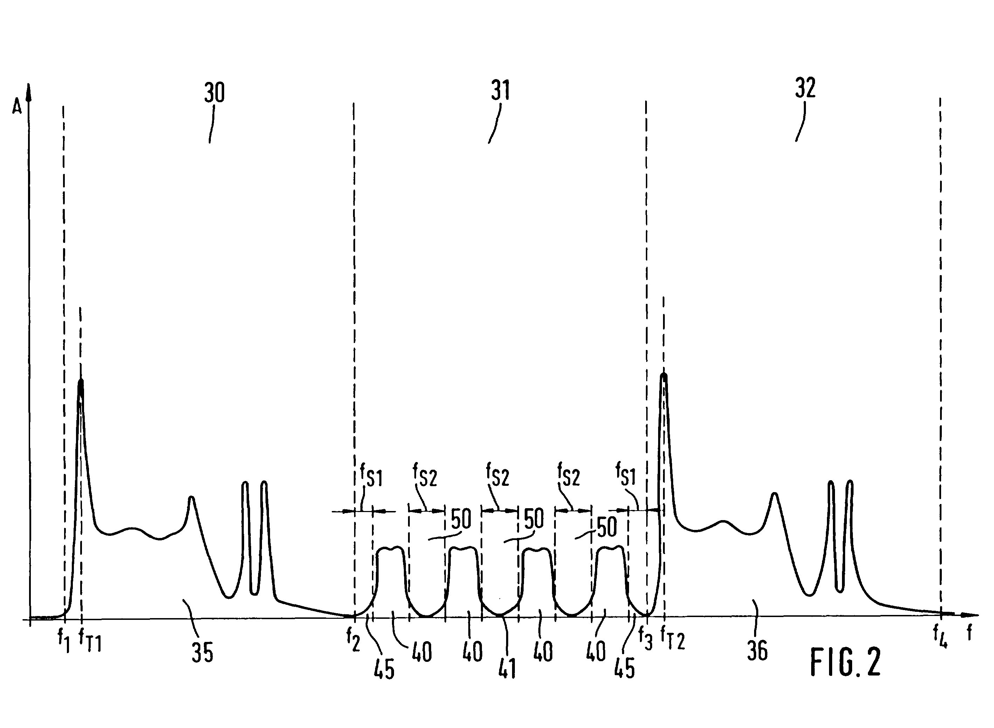

In Figur 1 kennzeichnet 10 einen Multiplexer, dem über einen ersten, einen zweiten, und einen dritten Codierer 1, 2 und 3 jeweils ein digitales Fernsehrundfunksignal und über einen vierten bis neunten Codierer 4 bis 9 jeweils ein digitales Rundfunksignal zugeführt wird. Der Multiplexer 10 ist über einen Modulator 15 und einen Verstärker 20 mit einer Sendeantenne 25 zur terrestrischen Abstrahlung der digitalen Rundfunk- und Fernsehrundfunksignale verbunden.

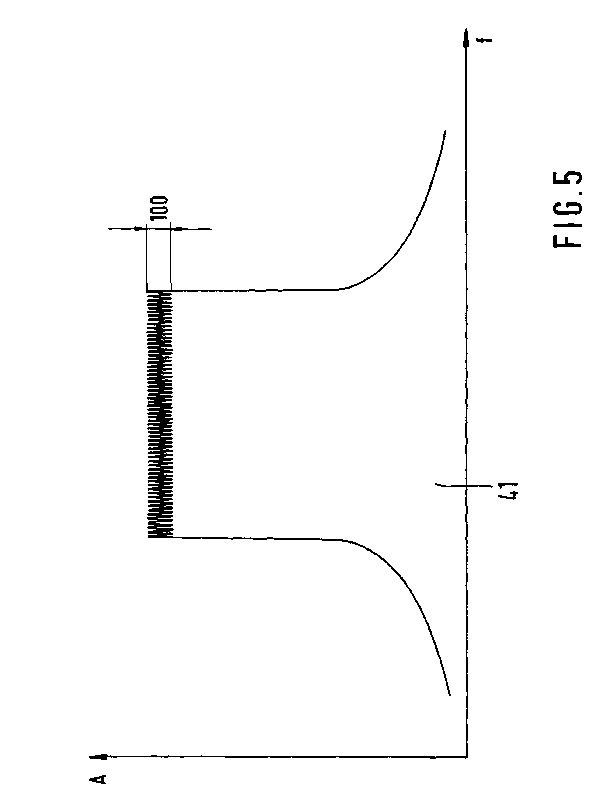

Die Codierer 1 bis 9 reduzieren die Datenmenge der digitalen Fernsehrundfunksignale und der digitalen Rundfunksignale, so daß eine Beschränkung der Frequenzspektren der digitalen Signale realisiert wird. Zur Reduktion der Datenmenge eignen sich Datenkompressionsalgorithmen, wie beispielsweise MPEG 1, MPEG 2 oder MPEG 4 (MPEG = Motion Picture Expert Group). Zur Tondaten-Reduktion eignet sich der MPEG-Standard ISO MPEG 11172 mit seinen verschiedenen Layern. Die über die Codierer 1 bis 9 dem Multiplexer 10 zugeführten digitalen Signale werden im Multiplexer 10 frequenzmultiplex zu einem Digitalsignal zusammengefaßt und anschließend im Modulator 15 einem Modulationsverfahren, wie vorzugsweise dem OFDM-Verfahren (OFDM = Orthogonal Frequency Division Multiplexing), gegebenenfalls auch einem PSK-Verfahren (PSK = Phase Shift Keying) oder einem QAM-Verfahren (QAM = Quadratur-Amplituden-Modulation) mit Trägerunterdrückung unterzogen. Ein Ziel dieser Maßnahme ist die Realisierung eines Frequenzspektrums 41 des digitalen Signals gemäß Figur 5 mit einem Dynamikumfang 100, der einen vorgegebenen Wert unterschreitet zur Verringerung von Inter- und Kreuzmodulation mit anderen digitalen Signalen oder mit analogen Signalen. Ein weiteres Ziel dieser Maßnahme ist es, die Amplitude des Frequenzspektrums 41 des digitalen Signals auf einen vorgegebenen Wert zu begrenzen und das digitale Signal auf die Frequenzlage eines Kanals 31, dem zwei Kanäle 30 und 32 gemäß Figur 2 zu tieferen und zu höheren Frequenzen hin benachbart sind, umzusetzen. Das modulierte digitale Signal wird anschließend im Verstärker 20 auf einen Wert eingepegelt, der in der Regel deutlich kleiner sein kann als die Spitzenpegel der analogen Fernsehrundfunksignale ist, und von der Sendeantenne 25 abgestrahlt.

In Figur 2 ist ein Beispiel der Belegung des Kanals 31 für das digitale Signal, des zu tieferen Frequenzen hin benachbarten Kanals 30 für ein analoges Fernsehrundfunksignal und des zu höheren Frequenzen hin benachbarten Kanals 32 ebenfalls für ein analoges Fernsehrundfunksignal dargestellt. Im Diagramm der Figur 2 ist die Amplitude A des entsprechenden Frequenzspektrums über der Frequenz f aufgetragen. Im folgenden wird der zu tieferen Frequenzen hin benachbarte analoge Kanal 30 als erster Kanal, der Kanal 31 für das digitale Signal als zweiter Kanal und der zu höheren Frequenzen hin benachbarte analoge Kanal 32 als dritter Kanal bezeichnet. Der erste Kanal 30 wird von einer unteren Grenzfrequenz f₁ und einer oberen Grenzfrequenz f₂ begrenzt und enthält das Spektrum 35 eines ersten analogen Fernsehrundfunksignals mit einem Bildträger bei der Frequenz f_{T1}. Der dritte Kanal 32 wird von einer unteren Grenzfrequenz f₃ und einer oberen Grenzfrequenz f₄ begrenzt und enthält das Spektrum 36 eines zweiten analogen Fernsehrundfunksignals mit einem Bildträger bei der Frequenz f_{T2}. Der zweite Kanal 31 für das digitale Signal wird von der oberen Grenzfrequenz f₂ des ersten Kanals 30 und der unteren Grenzfrequenz f₃ des dritten Kanals 32 begrenzt. Der zweite Kanal 31 ist als Nachbarkanal zweier analoger Kanäle 30 und 32 ein sogenannter verbotener Kanal. Das Spektrum des digitalen Signals ist in vier Blöcke 40 eingeteilt, die jeweils durch einen Schutzfrequenzabstand 50 der Frequenzbreite f_{S2} voneinander getrennt sind. Zwischen dem Spektrum 41 des digitalen Signals und der oberen Grenzfrequenz f₂ des ersten Kanals 30 beziehungsweise der unteren Grenzfrequenz f₃ des dritten Kanals 32 ist jeweils ein Schutzfrequenzabstand 45 der Frequenzbreite f_{S1} vorgesehen. Bei einer Frequenzbreite von etwa 7 MHz des zweiten Kanals 31 läßt sich dieser zweite Kanal 31 in vier Blöcke zu jeweils etwa 1,5 MHz einteilen und die verbleibenden etwa 1 MHz für die Schutzfrequenzabstände 50 zwischen den einzelnen Blöcken 40 und für die Schutzfrequenzabstände 45 zwischen dem Spektrum 41 des digitalen Signals und der oberen Grenzfrequenz f₂ des ersten Kanals 30 bzw. der unteren Grenzfrequenz f₃ des dritten Kanals 32 nutzen.

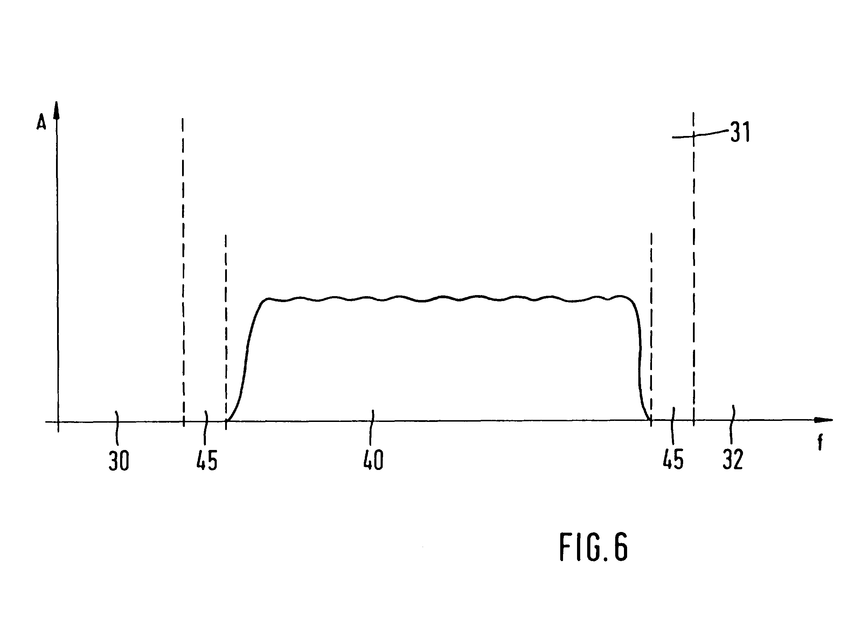

Bei einer Frequenzbreite von etwa 8 MHz für den zweiten Kanal 31 läßt sich dieser zweite Kanal 31 ebenfalls in vier Blöcke zu jeweils etwa 1,5 MHz einteilen und die verbleibenden etwa 2 MHz für die Schutzfrequenzabstände 50 zwischen den einzelnen Blöcken 40 und für die Schutzfrequenzabstände 45 zwischen dem Spektrum 41 des digitalen Signals und der oberen Grenzfrequenz f₂ des ersten Kanals 30 bzw. der unteren Grenzfrequenz f₃ des dritten Kanals 32 nutzen. Durch die Modulation im Modulator 15 wird das Spektrum 41 des digitalen Signals auf einen vorgegebenen Wert begrenzt, der deutlich kleiner als die Amplituden der Bildträger der analogen Fernsehrundfunksigale bei den Frequenzen f_{T1} und f_{T2} ist. Außerdem werden durch die Modulation der Dynamikumfang 100 und die Amplitude des Spektrums 41 des digitalen Signals auf jeweils einen vorgegebenen Wert begrenzt, der deutlich kleiner als der Dynamikumfang bzw. die Amplitude des Bildträgers der Spektren 35 und 36 der analogen Signale des ersten und des dritten Kanals 30 und 32 ist. Auf diese Weise kommt es nur zu geringer Inter- und Kreuzmodulation der digitalen Signale untereinander und mit den analogen Signalen des ersten und des dritten Kanals 30 und 32. Durch die Verwendung eines der oben genannten Modulationsverfahren und der Übertragung des digitalen Signals mit Pegeln, die deutlicher niedriger sind als die der analogen Signale, werden Spitzenpegel im digitalen Signal vermieden. Auf diese Weise werden Störungen der analogen Fernsehrundfunksignale in einem Empfänger mit begrenzter Selektivität vermindert, wie auch durch die Schutzfrequenzabstände 45 zwischen dem Spektrum 41 des digitalen Signals und der oberen Grenzfrequenz f₂ des ersten Kanals 30 bzw. der unteren Grenzfrequenz f₃ des dritten Kanals 32. Die Schutzfrequenzabstände 50 zwischen den einzelnen Blöcken 40 des Spektrums 41 des digitalen Signals dienen dem Schutz der jeweiligen Blöcke 40 mit den enthaltenen digitalen Rundfunk- und/oder Fernsehrundfunksignalen vor gegenseitiger Beeinflussung. Eine Beeinflussung der digitalen Signale im Empfänger durch die parrallel mit einfallenden und empfangenen analogen Fernsehrundfunksignale wirkt sich aufgrund der größeren Störsicherheit bei der gewählten digitalen Signalübertragung und -verarbeitung und einem gegebenenfalls vorsehbaren Einsatz fehlerkorrigierender Blockverfahren, Interleaving und/oder äußerem Fehlerschutz etwa nach Reed Solomon vernachlässigbar aus. In jedem der vier Blöcke 40 gemäß Figur 2 können wenigstens sechs Ton-Rundfunk-Stereoprogramme untergebracht werden, bei Datenkompression nach ISO MPEG 11172 Layer 2, oder wenigstens ein TV-Programm datenkomprimiert nach MPEG 1 oder 2 übertragen werden. Der ISO MPEG 11172 Layer 3 Standard erlaubt pro 1,5 MHz Block 40 die Erweiterung von sechs auf bis zu zwölf Ton-Rundfunk-Programme bei einer Übertragungsrate von 128 kB/s je Ton-Rundfunkprogramm, der MPEG 4 Standard eine Erweiterung der Zahl der Fernsehprogramme pro 1,5 MHz Block auf wenigstens zwei. Im zweiten Kanal 31 für das digitale Signal können auch weitere digitale Zusatzsignale oder auch andere Signalinhalte einzeln oder blockweise übertragen werden. Dazu gehören beispielsweise Datendienste wie Paging, Ansagedienste, elektronische Zeitung, Updates von Datenbanken, Verkehrsnachrichten und -bilddarstellungen, Börsendaten, Fahrpläne usw. Weiterhin gehören dazu auch DVB-Signale (DVB = Digital Video Broadcasting), die derzeit noch für 8 MHz-Raster definiert sind, zur Belegung von verbotenen Kanälen im UHF-Bereich. Bei einer Auslegung auf ein 7 MHz-Raster ist für die DVB-Signale auch die Belegung von verbotenen Kanälen im VHF-Bereich möglich. Dabei wird gemäß Figur 6 jeweils im zweiten Kanal 31 ein geschlossen codierter Frequenzblock 40 mit Schutzfrequenzabständen 45 zu den benachbarten Kanälen 30 und 32 übertragen.

Die zusätzliche Belegung von verbotenen Kanälen in Gebieten mit PAL B/G-Norm läßt sich wie folgt quantifizieren:
- Band I (VHF): ein zusätzlicher 7 MHz-Kanal, falls nur der Kanal E2, der eine Bildträgerfrequenz von 48,25 MHz aufweist, und der Kanal E4, der eine Bildträgerfrequenz von 62,25 MHz aufweist, mit TV-Programmen belegt sind,
zwei zusätzliche 7 MHz-Kanäle, falls nur der Kanal E3, der eine Bildträgerfrequenz von 55,25 MHz aufweist, belegt ist.
- Band III (VHF): vier zusätzliche 7 MHz-Kanäle oder mehr, je nach Belegung mit analog modulierten TV-Programmen
- Band IV (UHF): acht zusätzliche 8 MHz-Kanäle oder mehr je nach Belegung mit analog modulierten TV-Programmen
- Band V (UHF): vierzehn zusätzliche 8 MHz-Kanäle oder mehr, je nach Belegung mit analog modulierten TV-Programmen

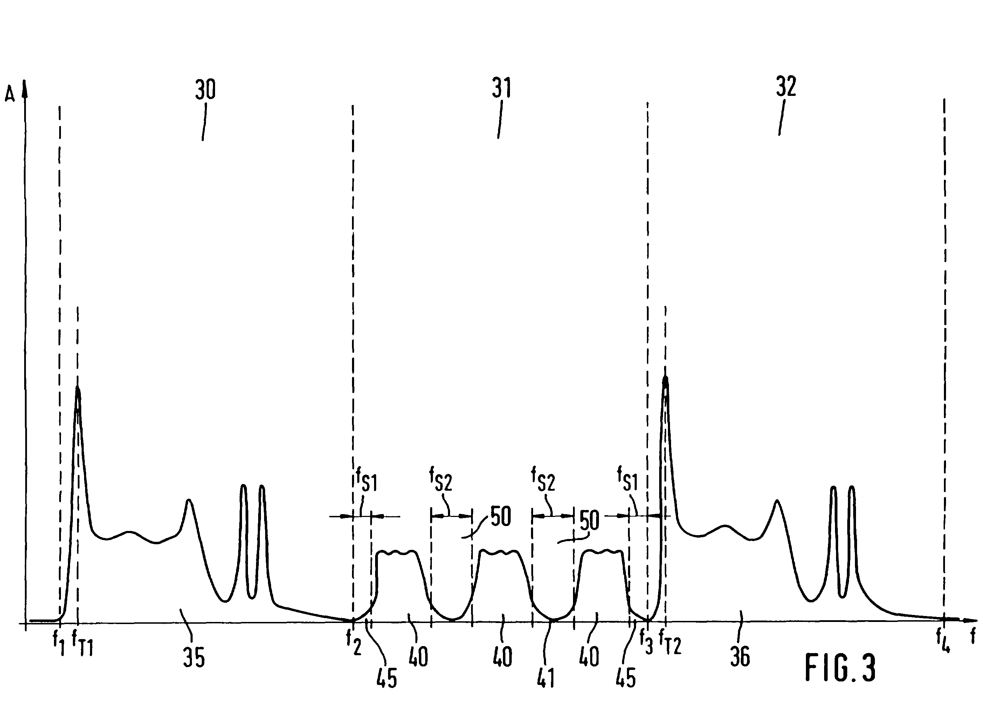

In einem weiteren Ausführungsbeispiel gemäß Figur 3 ist die Belegung des ersten Kanals 30 und des dritten Kanals 32 mit jeweils dem Spektrum eines analogen Fernsehrundfundsignals 35 beziehungsweise 36 wie in Figur 2 realisiert. Das Spektrum 41 des digitalen Signals im zweiten Kanal 31 jedoch ist in drei Blöcke 40 eingeteilt, die voneinander durch jeweils einen Schutzfrequenzabstand 50 der Frequenzbreite f_{S2} und von der oberen Grenzfrequenz f₂ des ersten Kanals 30 und der unteren Grenzfrequenz f₃ des dritten Kanals 32 jeweils durch einen Schutzfrequenzabstand 45 der Frequenzbreite f_{S1} getrennt sind. Diese Realisierung ist bei Verwendung eines 6 MHz-Rasters und einer Blockbreite von etwa 1,5 MHz sinnvoll. Die verbleibenden etwa 1,5 MHz werden für die Schutzfrequenzabstände 50 zwischen den einzelnen Blöcken 40 und für die Schutzfrequenzabstände 45 zwischen dem Spektrum 41 des digitalen Signals und der oberen Grenzfrequenz f₂ des ersten Kanals 30 bzw. der unteren Grenzfrequenz f₃ des dritten Kanals 32 genutzt.

Weiterhin besteht die Möglichkeit, anstelle der 1,5 MHz auch andere Blockbreiten zu wählen oder gar wie beim DVB gleich den ganzen zweiten Kanal 31 als Gesamtheit zu nutzen.

Bei Verwendung des OFDM-Modulationsverfahrens besteht die Möglichkeit, durch Gleichwellenversorgung im gewünschten Ausbreitungsgebiet die gleiche Frequenz im gleichen Kanal für das gleiche Programm bei Abstrahlung von verschiedenen Sendern zu nutzen.

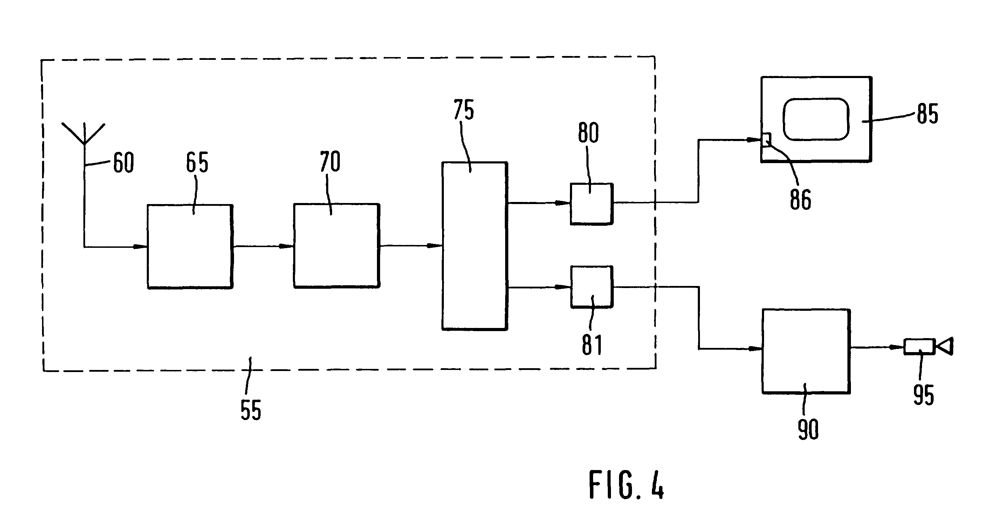

In Figur 4 kennzeichnet 55 einen Empfänger mit einer Empfangsantenne 60, die über ein Bandpaßfilter 65 und einen Demodulator 70 mit einem Demultiplexer 75 verbunden ist. Der Empfänger 55 enthält außerdem einen Decodierer 80 für digitale Fernsehrundfunksignale und einen Decodierer 81 für digitale Rundfunksignale. Dem Decodierer 80 für digitale Fernsehrundfunksignale sind die vom Demultiplexer 75 kommenden digitalen Fernsehrundfunksignale zugeführt und dem Decodierer 81 für digitale Rundfunksignale sind die digitalen Rundfunksignale, die ebenfalls vom Demultiplexer 75 kommen, zugeführt. Die decodierten digitalen Fernsehrundfunksignale werden dem Digitaleingang 86 eines TV-Gerätes 85 zugeführt und die decodierten digitalen Rundfunksignale werden über einen Audio-Verstärker 90 einem Lautsprecher 95 zugeführt.

Das vom Empfänger 55 über die Empfangsantenne 60 empfangene Signal enthält die digitalen Fernsehrundfunksignale und die digitalen Rundfunksignale, die von der Schaltung gemäß Figur 1 in einem digitalen Signal zusammengefaßt terrestrisch abgestrahlt wurden. Im Bandpaßfilter 65 wird der zweite Kanal 31, in dem dieses digitale Signal übertragen wird, selektiert. Das selektierte digitale Signal wird anschließend dem Demodulator 70 zugeführt und dort demoduliert. Das demodulierte Digitalsignal wird schließlich im Demultiplexer 75 in zwei digitale Signale aufgeteilt, wobei das eine digitale Signal die digitalen TV-Programme enthält und das andere digitale Signal die digitalen Ton-Rundfunkprogramme enthält. Im Decodierer 80 für digitale TV-Programme und im Decodierer 81 für digitale Ton-Rundfunkprogramme werden schließlich die digitalen Fernsehrundfunksignale bzw. die digitalen Rundfunksignale expandiert. Das expandierte digitale Signal, das die digitalen Fernsehrundfunksignale enthält, wird anschließend dem Digitaleingang 86 des TV-Gerätes 85 zugeführt, dort in die einzelnen TV-Programme aufgeteilt, einer Digital-/Analogwandlung unterzogen und schließlich in Bild und Ton wiedergegeben. Das expandierte digitale Signal, das die digitalen Rundfunksignale enthält, wird dem Audio-Verstärker 90 zugeführt, dort in die einzelnen Ton-Rundfunkprogramme aufgeteilt, einer Digital-/Analogwandlung unterzogen, verstärkt und dem Lautsprecher 95 zur Tonwiedergabe zugeführt.

In weiteren Ausführungsformen des erfindungsgemäßen Verfahrens wird durch die Modulation nur der Dynamikumfang 100 des Spektrums 41 des digitalen Signals auf einen vorgegebenen Wert beschränkt, in anderen Ausführungsformen findet nur eine Beschränkung der Amplitude des digitalen Spektrums 41 auf einen vorgegebenen Wert statt. In diesen Fällen ist dann in der Regel ein größerer Schutzfrequenzabstand 45 zu den Nachbarkanälen 30 und 32 vorhanden oder es werden Empfänger-Eingangsstufen mit höherer Selektivität eingesetzt.

## Patentansprüche

1. Verfahren zur terrestrischen Übertragung mindestens eines digitalen Signals, insbesondere eines digitalen Rundfunk-und/oder Fernsehrundfunksignals, dadurch gekennzeichnet, daß das mindestens eine digitale Signal in mindestens einem Kanal (31), der mindestens einem belegten oder unbelegten Kanal (30, 32) zur Übertragung eines analogen Fernsehrundfunksignals frequenzmäßig benachbart ist, übertragen wird, daß der Dynamikumfang (100) des Spektrums (41) des mindestens einen digitalen Signals einen vorgegebenen Wert, der deutlich kleiner als der Dynamikumfang des Spektrums (35, 36) des analogen Fernsehrundfunksignals ist, unterschreitet und/oder daß die Amplitude des Spektrums (41) des mindestens einen digitalen Signals einen vorgegebenen Wert, der deutlich kleiner als die Amplitude des Bildträgers des analogen Fernsehrundfunksignals ist, unterschreitet.

2. Verfahren nach Anspruch 1, dadurch gekennzeichnet, daß das mindestens eine digitale Signal vorzugsweise nach dem OFDM-Verfahren (OFDM = Coded Orthogonal Frequency Division Multiplexing) moduliert übertragen wird.

3. Verfahren nach Anspruch 1 oder 2, dadurch gekennzeichnet, daß das mindestens eine digitale Signal mit Pegeln übertragen wird, die einen vorgegebenen Wert, der deutlich kleiner als der Spitzenpegel des analogen Fernsehrundfunksignals ist, nicht überschreiten.

4. Verfahren nach Anspruch 1, 2 oder 3, dadurch gekennzeichnet, daß das mindestens eine digitale Signal mit einem Pegel empfangen wird, der um bis zu etwa 20dB niedriger als der Spitzenpegel des analogen Fernsehrundfunksignals ist.

5. Verfahren nach einem der vorhergehenden Ansprüche, dadurch gekennzeichnet, daß die Datenmenge des mindestens einen digitalen Signals durch Codierung reduziert wird.

6. Verfahren nach einem der vorhergehenden Ansprüche, dadurch gekennzeichnet, daß der Frequenzbereich des mindestens einen digitalen Signals in dem mindestens einen Kanal (31) von mindestens einem benachbarten belegten oder unbelegten Kanal (30, 32) durch einen Schutzfrequenzabstand (45) getrennt übertragen wird.

7. Verfahren nach einem der vorherigen Ansprüche, dadurch gekennzeichnet, daß in einem Ausbreitungsgebiet digitale, nach dem OFDM-Verfahren modulierte Signale gleichen Inhalts von verschiedenen Sendern auf gleicher Frequenz und im Frequenzbereich des mindestens einen Kanals (31) abgestrahlt werden.

8. Verfahren nach einem der vorherigen Ansprüche, dadurch gekennzeichnet, daß bei Übertragung mehrerer einzelner oder blockweise zusammengefaßter digitaler Signale in dem mindestens einen Kanal (31) die Frequenzbereiche mindestens zweier digitaler Signale durch einen Schutzfrequenzabstand (50) voneinander getrennt übertragen werden.

9. Verfahren nach einem der vorherigen Ansprüche, dadurch gekennzeichnet, daß der mindestens eine Kanal (31) bei einer Kanalbreite von etwa 6 MHz in drei Blöcke (40) zu jeweils etwa 1,5 MHz eingeteilt wird und daß die verbleibenden etwa 1,5 MHz als Schutzfrequenzabstände (50) zwischen den einzelnen Blöcken (40) und als Schutzfrequenzabstände (45) zwischen dem Frequenzbereich des digitalen Spektrums (41) und einem oberen und einem unteren Nachbarkanal (32) und (30) genutzt werden.

10. Verfahren nach einem der Ansprüche 1 bis 8, dadurch gekennzeichnet, daß der mindestens eine Kanal (31) bei einer Kanalbreite von etwa 7 MHz in vier Blöcke (40) zu jeweils etwa 1,5 MHz eingeteilt wird und daß die verbleibenden etwa 1 MHz als Schutzfrequenzabstände (50) zwischen den einzelnen Blöcken (40) und als Schutzfrequenzabstände (45) zwischen dem Frequenzbereich des digitalen Spektrums (41) und dem oberen und dem unteren Nachbarkanal (32) und (30) genutzt werden.

11. Verfahren nach einem der Ansprüche 1 bis 8, dadurch gekennzeichnet, daß der mindestens eine Kanal (31) bei einer Kanalbreite von etwa 8 MHz in vier Blöcke (40) zu jeweils etwa 1,5 MHz eingeteilt wird und daß die verbleibenden etwa 2 MHz als Schutzfrequenzabstände (50) zwischen den einzelnen Blöcken (40) und als Schutzfrequenzabstände (45) zwischen dem Frequenzbereich des digitalen Spektrums (41) und dem oberen und dem unteren Nachbarkanal (32) und (30) genutzt werden.

12. Verfahren nach einem der Ansprüche 1 bis 8, dadurch gekennzeichnet, daß in dem mindestens einen Kanal (31) ein geschlossen codierter, insbesondere DVB-Signale enthaltender Frequenzblock (40) mit Schutzfrequenzabständen (45) zu den benachbarten Kanälen (30) und (32) übertragen wird.

## Claims

1. Method for the terrestrial transmission of at least one digital signal, in particular a digital broadcast radio and/or broadcast television signal, characterized in that the at least one digital signal is transmitted in at least one channel (31) which is adjacent in terms of frequency to at least one occupied or unoccupied channel (30, 32) for transmission of an analogue broadcast television signal, in that the dynamic range (100) of the spectrum (41) of the at least one digital signal is less than a predetermined value, which is considerably less than the dynamic range of the spectrum (35, 36) of the analogue broadcast television signal, and/or in that the amplitude of the spectrum (41) of the at least one digital signal is less than a predetermined value which is considerably less than the amplitude of the vision carrier of the analogue broadcast television signal.

2. Method according to Claim 1, characterized in that the at least one digital signal is preferably transmitted in modulated form using the OFDM method (OFDM = Coded Orthogonal Frequency Division Multiplexing).

3. Method according to Claim 1 or 2, characterized in that the at least one digital signal is transmitted with levels which do not exceed a predetermined value, which is considerably less than the peak level of the analogue broadcast television signal.

4. Method according to Claim 1, 2 or 3, characterized in that the at least one digital signal is received at a level which is up to about 20 dB less than the peak level of the analogue broadcast television signal.

5. Method according to one of the preceding claims, characterized in that the amount of data in the at least one digital signal is reduced by coding.

6. Method according to one of the preceding claims, characterized in that the frequency range of the at least one digital signal in the at least one channel (31) is transmitted separated by a guard frequency interval (45) from at least one adjacent occupied or unoccupied channel (30, 32).

7. Method according to one of the preceding claims, characterized in that digital signals having the same content and modulated using the OFDM method are transmitted in one broadcasting area from different transmitters at the same frequency and in the frequency range of the at least one channel (31).

8. Method according to one of the preceding claims, characterized in that, when a plurality of individual digital signals, or digital signals combined into blocks, are transmitted in the at least one channel (31), the frequency ranges of at least two digital signals are transmitted separated from one another by a guard frequency interval (50).

9. Method according to one of the preceding claims, characterized in that, for a channel width of about 6 MHz, the at least one channel (31) is split into three blocks (40) of about 1.5 MHz each, and in that the approximately 1.5 MHz which remain are used to provide guard frequency intervals (50) between the individual blocks (40) and guard frequency intervals (45) between the frequency range of the digital spectrum (41) and an upper and a lower adjacent channel (32) and (30).

10. Method according to one of Claims 1 to 8, characterized in that, for a channel width of about 7 MHz, the at least one channel (31) is split into four blocks (40) of about 1.5 MHz each, and in that the approximately 1 MHz which remains is used to provide guard frequency intervals (50) between the individual blocks (40) and guard frequency intervals (45) between the frequency range of the digital spectrum (41) and the upper and the lower adjacent channel (32) and (30).

11. Method according to one of Claims 1 to 8, characterized in that, for a channel width of about 8 MHz, the at least one channel (31) is split into four blocks (40) of about 1.5 MHz each, and in that the approximately 2 MHz which remain are used to provide guard frequency intervals (50) between the individual blocks (40) and guard frequency intervals (45) between the frequency range of the digital spectrum (41) and the upper and the lower adjacent channel (32) and (30).

12. Method according to one of Claims 1 to 8, characterized in that a closed-coded frequency block (40), in particular containing DVB signals, is transmitted in the at least one channel (31), with guard frequency intervals (45) from the adjacent channels (30) and (32).

## Revendications

1. Procédé de transmission terrestre d'au moins un signal numérique notamment d'un signal numérique radio et/ou vidéo,
caractérisé en ce qu'
au moins un signal numérique est transmis dans au moins un canal (31) qui est voisin en fréquence d'au moins un canal occupé ou non occupé (30, 32) pour transmettre un signal vidéo analogique,
l'enveloppe dynamique (100) du spectre (41) d'au moins un signal numérique présente une valeur prédéterminée significativement inférieure à l'enveloppe dynamique du spectre (35, 36) du signal vidéo analogique, et/ou l'amplitude du spectre (41) d'au moins un signal numérique est inférieure à une valeur prédéterminée, significativement inférieure à l'amplitude de la porteuse image du signal vidéo analogique.

2. Procédé selon la revendication 1,
caractérisé en ce qu'
on transmet de manière modulée au moins un signal numérique de préférence selon le procédé OFDM (OFDM : multiplexage par division de fréquence orthogonale codée).

3. Procédé selon la revendication 1 ou 2,
caractérisé en ce qu'
on transmet au moins un signal numérique avec des niveaux qui ne passent pas en dessous d'une valeur prédéterminée significativement inférieure aux niveaux maximums du signal vidéo analogique.

4. Procédé selon la revendication 1, 2, 3,
caractérisé en ce qu'
au moins un signal numérique est reçu avec un niveau qui est inférieur jusqu'à environ 20 dB du niveau maximum du signal vidéo analogique.

5. Procédé selon l'une quelconque des revendications précédentes,
caractérisé en ce que
la quantité de données d'au moins un signal numérique se réduit par codage.

6. Procédé selon l'une quelconque des revendications précédentes,
caractérisé en ce que
la plage de fréquences d'au moins un signal numérique est transmise dans au moins un canal (31) séparé d'au moins un canal voisin (30, 32) occupé ou non occupé, et séparé d'une distance de fréquence protectrice (45).

7. Procédé selon l'une quelconque des revendications précédentes,
caractérisé en ce que
dans un domaine d'extension, on émet de manière numérique des signaux modulés selon le procédé OFDM de même contenu par différents émetteurs et sur la même fréquence et dans une plage de fréquences d'au moins un canal (31).

8. Procédé selon l'une quelconque des revendications précédentes,
caractérisé en ce qu'
à la transmission de plusieurs signaux numériques séparés ou regroupés par blocs dans au moins un canal (31), on transmet séparément les plages de fréquences d'au moins deux signaux numériques en les séparant d'une distance de fréquence de protection (50).

9. Procédé selon l'une quelconque des revendications précédentes,
caractérisé en ce qu'
au moins un canal (31) est subdivisé pour une largeur de canal d'environ 6 MHz en trois blocs (40) de chaque fois environ 1,5 MHz et,
le reste correspondant sensiblement à 1,5 MHz est utilisé pour les distances de fréquence de protection (50) entre les différents blocs (40) et comme distances de protection de fréquence (45) entre la plage de fréquences du spectre numérique (41) et un canal voisin (32, 30) supérieur et inférieur.

10. Procédé selon l'une quelconque des revendications 1 à 8,
caractérisé en ce qu'
au moins un canal (31), pour une largeur de canal d'environ 7 MHz, est divisé en quatre blocs (40) de chaque fois environ 1,5 MHz, et le reste d'environ 1,5 MHz est utilisé pour les intervalles de fréquence de protection (50) entre les différents blocs (40) et comme intervalles de fréquence de protection (45) entre la plage de fréquences du spectre numérique (41) et le canal voisin supérieur et inférieur (32, 30).

11. Procédé selon l'une quelconque des revendications 1 à 8,
caractérisé en ce qu'
au moins un canal (31) est subdivisé pour une largeur de canal d'environ 8 MHz en quatre blocs (40) de chaque fois environ 1,5 MHz et,
le reste, environ 2 MHz est utilisé pour les intervalles de fréquence de protection (50) entre les différents blocs (40) et comme intervalles de fréquence de protection (45) entre la plage de fréquences du spectre numérique (41) et le canal voisin supérieur et inférieur (32, 30).

12. Procédé selon l'une quelconque des revendications 1 à 8,
caractérisé en ce que
dans au moins un canal (31) on transmet un bloc de fréquences (40) à codage fermé contenant notamment des signaux DVB, avec des intervalles de fréquence de protection (45) vis-à-vis des canaux voisins (30, 32).
